# EUROPÄISCHE PATENTSCHRIFT

(11) **EP 0 868 552 B1**
(45) Veröffentlichungstag und Bekanntmachung des Hinweises auf die Patenterteilung: **10.05.2000**
(21) Anmeldenummer: 96943899.3
(22) Anmeldetag: 07.12.1996
(51) Int. Cl.: D04H 1/54, D04H 3/16

(54) **VERFAHREN ZUR HERSTELLUNG EINES STRUKTURIERTEN, VOLUMINÖSEN VLIESES**
PROCESS FOR PRODUCING A STRUCTURED, VOLUMINOUS NONWOVEN
PROCEDE DE PRODUCTION D'UN NON-TISSE STRUCTURE VOLUMINEUX

(30) Priorität: 19.12.1995 DE 19547319
(43) Veröffentlichungstag der Anmeldung: 07.10.1998
(73) Patentinhaber: HCD Hygienic Composites Development GMBH, 45481 Mülheim an der Ruhr (DE)
(72) Erfinder: WAGNER, Werner, D-31542 Bad Nenndorf (DE)
(74) Vertreter: Hoffmeister, Helmut, Dr. Dipl.-Phys.
(86) Internationale Anmeldenummer: EP9605481
(87) Internationale Veröffentlichungsnummer: WO9722742

(56) Entgegenhaltungen:
- US-A- 4 333 979
- US-A- 4 913 911
- US-A- 5 057 357
- US-A- 5 399 174

## Beschreibung

Die Erfindung betrifft ein Verfahren zur Herstellung eines strukturierten, voluminösen Vlieses, mit folgenden Verfahrensschritten:
a) Herstellung eines Spinnvlieses aus einer Vielzahl von Einzelfilamenten, die gereckt und zu einem Faserstrang abgelegt werden,
b) Pressen und Verschweißen des Faserstranges durch ein erstes Walzenpaar zu einem Rohvlies,
c) Nachbearbeitung des Rohvlieses durch ein zweites Walzenpaar.

Ein solches Verfahren ist bekannt aus US-PS 5 399 174. In dieser Patentschrift wird eine Schichtfolie beschrieben, bei der eine Vliesschicht, die aus gekräuselten polymerischen Faser-Bündeln besteht und mit einer polymerischen Folie laminiert wird, wobei ein walzengeprägtes Verbindungs- und Ziermuster eingesetzt wird, das das Vlies mit der Folie verbindet.

In der vorgenannten US-Patentschrift wird in der Beschreibungseinleitung (BACKGROUND OF THE INVENTION) auch erwähnt, daß das Walzprägen eine Verfahrensart ist, um die Haptik des Vlieses zu ändern und gleichzeitig ein dekoratives Design zu erzeugen. Hingewiesen wird u. a. auf die US-Patentschrift 4 592 943, gemäß der ein Verfahren angewendet wird, bei dem das Vlies erwärmt wird, wenn die zu bearbeitende Vliesfolie zwischen zwei Gitter läuft, so daß sich das Gitter in seiner bestimmten Form dem Vlies mitteilt und es sich entsprechend abbildet. Weiterhin wird auf US-Patent 4 774 124 hingewiesen, das ein Musterwalzen-Prägeverfahren offenbart.

Den vorgenannten Verfahren ist gemeinsam, daß von vornherein eine voluminöse Vliesschicht erzeugt werden muß, die dann mit Hilfe des Prägeverfahrens gemustert wird. Die Vliesschicht nimmt jedoch in ihrem Volumen nicht zu, sondern lediglich ab.

Es stellt sich daher die Aufgabe, ein Spinnvlies, das bereits abgelegt und auch entsprechend dem Vliesverfahren bereits partiell gebundene Fasern und Filamente aufweist, mit einer definierten Volumenvergrößerung und "Dreidimensionalität" zu versehen, indem man das Flächengebilde des Rohvlieses in einer Nachbearbeitung durch das zweite Walzenpaar in neuartiger Weise behandelt.

Hierzu wird vorgeschlagen, daß bei der Bearbeitung gegenüber dem Stand der Technik zwei wesentliche Verfahrensschritte neu eingeführt werden:
Im Rahmen des Verfahrensschrittes a) wird das anfängliche Recken der einzelnen Filamente lediglich im Bereich von 50 bis 70 % der maximal möglichen Streckung durchgeführt,
und
im Rahmen des Schrittes c) erfolgt die Nachbearbeitung des Rohvlieses mittels eines Walzenpaares, das aus einer Positivwalze mit zahlreichen, über die Walzenmantelfläche verteilten Noppen oder aus einer Negativwalze mit ebenso zahlreichen Vertiefungen besteht, wobei während des Walzvorganges die Noppen in die Vertiefungen eingreifen und das Rohvlies im Bereich der Walzeneingriffe nachrecken.

Mit dem vorgeschlagenen Verfahren werden Spinnvliese, die nach einem klassischen Vliesbildungsverfahren erzeugt wurden, wesentlich verbessert. Das Vliesbildungsverfahren der bekannten Art erzeugt ein Rohvlies und auch ein Endprodukt mit einer im wesentlichen zweidimensionale Faserablage. Man spricht deshalb von einem papierartigen Charakter, der nur durch aufwendige, zum Teil komplizierte Zusatzarbeitsgänge gemäß Stand der Technik in Richtung einer dreidimensionalen Faserausrichtung verbessert werden kann.

Es ist zwar bekannt, durch Einsatz von stark gekräuselten Fasern (Stapelfasern) eine voluminöse Ablage zu erzielen; ohne Nachbehandlung ergibt diese jedoch keinen ausreichenden textilen Griff. Bei Spinnvliesstoffen kann man überdies üblicherweise nicht auf die physikalische Hilfe von gekräuselten Stapelfasern zurückgreifen.

Bei der Herstellung von Spinnvliesstoffen wird ein Polymer, im allgemeinen ausgewählt aus der Gruppe Polyethylen, Polypropylen oder Polyamid, in einem Extruder aufgeschmolzen. Die Schmelze wird homogenisiert, gefiltert und einer oder mehreren Spinnpumpen zugeführt. Die Spinnpumpen sorgen für den konstanten und gleichmäßigen Druck an einer Spinndüse. Unter bestimmten konstanten Druck wird die Schmelze durch die Düsen gepreßt und abgekühlt. In einem speziellen Reckvorgang werden die einzelnen Filamente gleichartig gereckt und auf einem laufenden Aufnahmeband abgelegt. Dabei entsteht ein Faserstrang, der im wesentlichen zweidimensional ausgerichtet ist. Der Faserstrang wird einem ersten Walzenpaar zugeführt, das üblicherweise aus einer genarbten und einer glatten Stahlwalze besteht, so daß der Faserstrang partiell verschweißt werden kann. Erneut wird hierdurch die Zweidimensionalität verstärkt. Das sich ergebende Produkt wird als Rohvlies bezeichnet.

Mit dem neuen Verfahren erhält man einen stark dehnfähigen und voluminöser gemachten Vliesstoff. Durch die Anordnung der Noppen mit den Vertiefungen lassen sich beliebige Muster erzielen. Derartige Musterungen sind im Stand der Technik beschrieben.

Das zur Vliesumformung erforderliche Walzenpaar besteht aus einer Positivwalze, deren Noppen in die Vertiefungen der Negativwalze hineinarbeiten, so daß das zwischen den Walzen liegende Fasermaterial gestreckt und gedehnt wird.

Die Einfahrtiefe und die Länge, sowie die Gestalt der Noppen sind für die Stärke und die Struktur der Umformung wesentlich. Durch die Auswahl der entsprechenden geometrischen Verhältnisse kann die Reckung so weit getrieben werden, daß es zu einer gewünschten Vliesverdünnung im Spitzenbereich der ausgebildeten Noppen kommt. Dies kann gegebenenfalls auch wie eine Perforierung wirken oder eine Perforierung im physikalischen Sinne darstellen.

Die Umformungstechnik führt zu einer hohen Vliesdehnung. Das Material wird nicht aus der Strangbreite geholt, was, wie bekannt, zu einem starken Breiteneinsprung führt. Besonders deutlich wird dies, wenn eine Vliesbahn mit Längsrillendehnung erzeugt wird.
Bei dem Verfahren wird vorzugsweise die Temperatur so eingehalten, daß während des zweiten Reckens durch das Walzenpaar dieses im wesentlichen bei der gleichen Temperatur des Vlieses durchgeführt wird, wie bei der, die während des ersten Reckens herrscht. Abweichungen von ± 10 % im Bereich der Temperatur sind jedoch ohne weiteres zu verkraften.

Die Form der Noppen und die Materialauswahl für den Walzenmantel ist sehr wesentlich,für das Ergebnis des Verfahrens.

Beispielsweise können Noppen und Vertiefungen der Walzen aus Metall gefertigt sein und relativ scharfe Scherkanten ergeben. In diesem Falle ist nicht auszuschließen, daß schon bei relativ geringen Vertiefungen eine Beschädigung des Materials erfolgt. Es ist daher eine relativ geringe Noppentiefe angesagt.

Interessanterweise wurde gefunden, daß man den gesuchten Umformungs- und Reckeffekt noch dadurch deutlich verstärken kann, indem man die Noppenwalze aus Metall ausführt oder mit Metall beschichtet und dabei die Noppen auf eine mögliche maximale Länge bringt. Für die Gegenwalze, die die Vertiefungen aufweist, wird dagegen ein Mantel verwendet, der aus einem Kunststoff, insbesondere aus einem Elastomer, besteht oder eine Beschichtung aus einem Kunststoff aufweist. Beispielsweise kann für den Mantel verwendet werden ein Kunststoff aus der Gruppe Hartgummi, Silikon-Kautschuk, Polytetrafluorethylen, Polyurethan oder Polyamid.

Es zeigt sich, daß die mit Kunststoff beschichtete und Noppen aufweisende Oberfläche ein elastisches Bett darstellt, in das die Metallnoppen bei dem erfindungsgemäßen Recken wesentlich tiefer eindringen können als wenn beide Walzen-Oberflächen aus Metall bestehen. Es läßt sich demnach mit einer Kombination aus Metall- und Kunststoffoberflächen ein extrem flauschiges, dreidimensional orientiertes Vlies herstellen.

Für die Musterung der Walzen gilt, daß sie mit der heute bekannten Technik des Lasergravierens hergestellt werden kann. Für die Noppenanordnungen können beliebig ausgewählte, geometrische Anordnungen gefunden werden. Die Noppen können durch Stege, Kreise, Rinnen oder versetzt angeordnete Stege, Noppen oder stempelartige Bildelemente ersetzt werden. Die jeweilige Anwendung bestimmt das Bild der Effekte der Umformungselemente auf den Walzen.

Dabei wird insbesondere vorgeschlagen, daß die Ränder der Walzen fest aufeinanderliegend ablaufen, um zu verhindern, daß der Vliesstrang lediglich in die Vertiefungen hineingezogen, nicht aber dort gereckt wird.

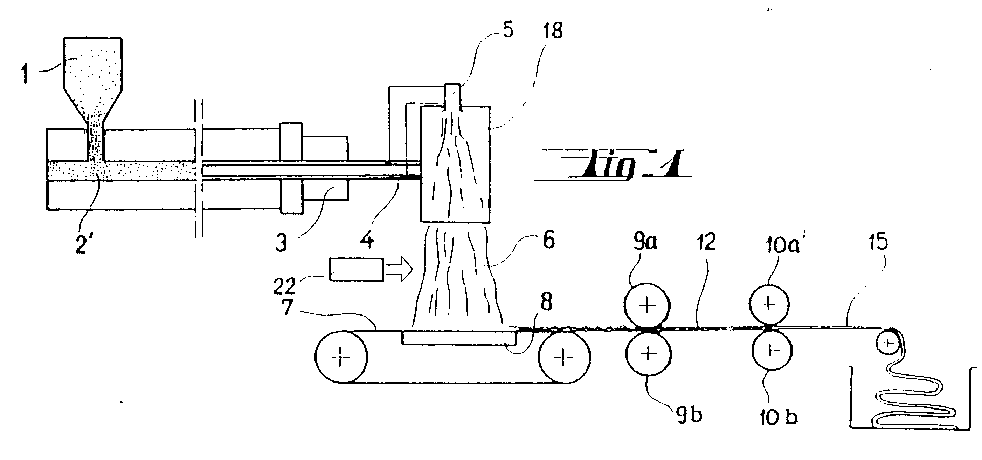

Ein Ausführungsbeispiel der Erfindung wird anhand eines Beispieles erläutert. Hierzu wird die Zeichnung herangezogen, die in schematischer Darstellung eine für das Verfahren geeignete Einrichtungzeigt.

In der Zeichnung ist schematisch der Werdegang eines strukturierten, voluminösen Vlieses dargestellt. In einem Vorratssilo 1 ist ein thermoplastisches Granulat, beispielsweise aus einem entsprechend seinem Vlies verarbeitbaren Polyethylen, Polypropylen oder Polyamid, enthalten. Es gelangt in einen beheizbaren Extruder und wird von der Extruderschnecke 2' bis zum Mundstück 3 des Extruders vorgetrieben. Anschließend wird das Extrudat über einen Führungsrüssel 4 in eine Spinndüse 5 eingespeist. Aus der Spinndüse 5 gelangt ein in feinste Fäden aufgeteilter Spinnstrang in eine Reckvorrichtung 18 und anschließend in den Bereich eines Abschreckgebläses 22, mit dem der gereckte Spinnstrang 6 abgekühlt wird.

In der Reckvorrichtung 18 wird die Einzelfaser nicht voll verstreckt. Lediglich ein Verstreckungsgrad von 60 bis 70 % bei Polyethylen und Polypropylen bzw. von 50 bis 70 % bei Polyester oder Polyamid ist vorteilhaft. Dies ist im Gegensatz zu den sonst üblichen Reckbedingungen, die eine möglichst volle Prozeßverstreckung schon aus Materialersparnisgründen vorziehen.

Der gereckte Spinnstrang 6 wird auf einen Netzförderer 7 gegeben, der mit einem Vakuumrrahmen 8 unterlegt ist, so daß sich der Spinnstrang flach auf den Netzförderer 7 auflegt. Er wird dann zu einem ersten Walzenpaar, nämlich Kalanderwalzen 9a und 9b komprimiert. Nach dieser Bearbeitung erhält man ein Rohvlies 12; dieses hat noch ein Flächengewicht von etwa 20 g/m² und ist nur wenige Millimeter dick.

Das so gebildete Rohvlies 12 hat in den Kalanderwalzen 9a/b nur eine sehr lockere Vliesverfestigung erhalten. Eine örtliche Verschmelzung ist nur leicht vorgenommen worden, da hierdurch die Materialbehandlung erleichtert wird.

Das Rohvlies 12 wird nunmehr einem zweiten Walzenpaar 10a, 10b zugeführt, das durch zwei Reckprofilwalzen gebildet wird. Die Walze 10a ist eine Positivwalze mit zahlreichen, über die Walzenmantelfläche verteilten Noppen, während die Negativwalze 10b mit ebenso zahlreichen Vertiefungen versehen ist. Während des Walzvorganges greifen die Noppen in die Vertiefungen ein und recken das Rohvlies im Bereich des Eingriffes nach. Mit dem Recken durch die beiden Walzen 10a und 10b ist eine genau definierte, örtliche Überdehnung des Faserverbundes gegeben, da der Rohstrang 12 am Rande, d. h. an den Außenkanten der Walzen 10a/b festgehalten wird und nicht nach innen hineingezogen werden kann. Das Vlies wird demnach örtlich gehalten und unmittelbar daneben extrem gedehnt. Entsprechend der Ausbildung der Walzen kann auch auf eine seitliche Festhaltung verzichtet werden.

Der Mantel der Reckprofilwalzen 10a und 10b ist so beschaffen, daß der erhabene Teil, d. h. die Noppen, in einen freien Raum des Gegenwerkzeuges vorstoßen, während die flache Zone des Prägewerkzeugs das Teil des streckfähigen Vliesstoffes festhält. Walze und Gegenwalze sind exakt aufeinander eingestellt.

Üblicherweise ist die Walze 10a mit einem Mantel oder einer Beschichtung aus Metall versehen, d. h. die Noppen haben eine metallene Außenseite. Die Walze 10b dagegen ist mit einem Hartgummi oder einem ähnlichen Elastomer beschichtet, dessen Shore-A-Härte jenseits 100 liegen sollte.

Das aus den Walzen 10a/b herauskommende Vlies 15 hat durch das örtliche Nachstrecken nicht nur in seiner Faserlänge, sondern auch in seinem Vliesstoffgefüge eine starke Veränderung erfahren. Das Rohvlies erhält durch das entsprechende Walzendesign eine bouclée- oder hammerstrichartige Struktur mit dreidimensionalem Charakter. Die Einzelfaser wird im Ausdehnungsbereich hochfest, so daß der Volumencharakter auch dauerbeständig ist. Der Griff des ganzen Vlieses wird deutlich weicher und zeigt einen veränderten Wassertransport-Vektor. Die Feuchtigkeit wird von der Oberfläche nach der Vliesrückseite entlang den hochstehenden Endlosfasern transportiert.

Die Umformung kann bei relativ niedrigen Temperaturen erfolgen. Bevorzugt werden Werkzeugtemperaturen, die im wesentlichen dieselben sind, die in der Reckvorrichtung 18 angewendet werden. Sie liegen bei etwa 50 bis 75°C.

Das beschriebene Verfahren kann auch online mit der Spinnvliesherstellung erfolgen. Es kann aber auch ein Rohvlies getrennt hergestellt und nachverarbeitet werden. Es ist auch noch ein Zweitvlies oder eine Folie an das gebauschte Vlies zu kaschieren.

Das vorgenannte Verfahren kann im Prinzip bei allen Kunststoffen wie Polyethylen, Polypropylen, Polyamid Anwendung finden, die sich für das Schmelzspinnverfahren mit einem Vorreckgang eignen.

## Patentansprüche

1. Verfahren zur Herstellung eines strukturierten, voluminösen Vlieses, mit folgenden Verfahrensschritten:
(a) Herstellung eines Spinnvlieses aus einer Vielzahl von Einzelfilamenten, die gereckt und zu einem Faserstrang abgelegt werden,
(b) Pressen und Verschweißen des Faserstranges durch ein erstes Walzenpaar (9a, b) zu einem Rohvlies (12),
(c) Nachbearbeitung des Rohvlieses durch ein zweites Walzenpaar (10a, b),
dadurch gekennzeichnet, daß
das anfängliche Recken der Einzelfilamente lediglich im Bereich von 50 bis 70% der maximal möglichen Streckung erfolgt
und daß die Nachbearbeitung des Rohvlieses (12) mittels eines Walzenpaars (10a, b) erfolgt, das aus einer Positivwalze (10a) mit zahlreichen, über die Walzenmantelfläche verteilten Noppen und aus einer Negativwalze (10b) mit ebenso zahlreichen Vertiefungen besteht, wobei während des Walzvorganges die Noppen in die Vertiefungen eingreifen und das Rohvlies im Bereich der Walzeneingriffe nachrecken.

2. Verfahren nach Anspruch 1, dadurch gekennzeichnet, daß als Ausgangsmaterial für die Vliesherstellung ein Polyethylen, Polypropylen oder Polyamid verwendet wird.

3. Verfahren nach Anspruch 1, dadurch gekennzeichnet, daß während des zweiten Reckens der Rohvliesstrang (12) seitlich an den Walzenrändern straff gehalten wird.

4. Verfahren nach Anspruch 1, dadurch gekennzeichnet, daß während des zweiten Reckens der Rohvliesstrang auf einer Temperatur gehalten wird, die im wesentlichen der Temperatur gleicht, die während des ersten Reckens herrschte.

5. Verfahren nach Anspruch 1, dadurch gekennzeichnet, daß das in den Vertiefungen erfolgende zweite Recken zu einer erheblichen Verdünnung, gegebenenfalls bis zur Perforierung des Rohvlieses im Bereich der Walzeneingriffe führt.

## Claims

1. Method of manufacturing a bulky textured non-woven, comprising the following steps:
a) producing a spunbonded non-woven from a plurality of individual filaments that have been stretched and deposited in the form of a skein of fibres,
b) pressing and hot-bonding the skein of fibres into a semi-finished non-woven (12) by means of a first pair of rollers (9a, 9b), and
c) subsequently processing the semi-finished non-woven with a second pair of rollers (10a, 10b),
characterised in that
the initial stretching of the individual filaments is performed merely in a range from 50 to 70% of their maximal possible extension,
and that subsequent processing of the semi-finished non-woven (12) is effected by means of a pair of rollers (10a, b) comprising a positive roller (10a) with many knobs distributed over its surface, and a negative roller (10b) with the same number of depressions, the knobs during rolling engaging in the depressions, stretching the semi-finished non-woven further in the vicinity of the roller engagement.

2. Method according to claim 1, characterised in that the starting material used for producing the non-woven is a polyethylene, polypropylene or polyamide.

3. Method according to claim 1, characterised in that the skein of semi-finished non-woven (12) is secured tight laterally against the edges of the rollers during the second stretching.

4. Method according to claim 1, characterised in that the skein of semi-finished non-woven during the second stretching is maintained at a temperature which is essentially the same as the temperature prevailing during the first stretching.

5. Method according to claim 1, characterised in that the second stretching in the depressions results in considerable thinning, even to the extent of perforating the semi-finished non-woven in the vicinity of the engagement of the rollers.

## Revendications

1. Procédé de fabrication d'un non-tissé, ou voile, structuré volumineux comprenant les étapes consistant à:
(a) fabriquer un voile de fils à partir d'une série de filaments individuels qui sont étirés et sont disposés de manière à former un brin de fibres,
(b) comprimer et souder le brin de fibres au moyen d'une première paire de cylindres (9a, b) pour former un voile brut (12);
(c) appliquer au voile brut une finition au moyen d'une deuxième paire de cylindres (10a, b),
caractérisé en ce que
l'étirage initial des filaments individuels est effectué uniquement dans la plage de 50 à 70% de l'étirage maximal possible, et en ce que
le traitement de finition du voile brut (12) est effectué au moyen d'une paire de cylindres (10a, b) qui se compose d'un cylindre positif (10a), comportant de nombreux boutons répartis sur la surface d'enveloppe du cylindre, et d'un cylindre négatif (10b) comportant des évidements aussi nombreux, les boutons pénétrant dans les évidements pendant le processus de cylindrage et étirant alors le voile brut dans la zone de la ligne de contact des cylindres.

2. Procédé selon la revendication 1, caractérisé en ce qu'un polyéthylène, un polypropylène ou un polyamide est utilisé comme matière initiale pour la fabrication du voile.

3. Procédé selon la revendication 1, caractérisé en ce que le brin (12) de voile brut est maintenu tendu aux bords des cylindres pendant le deuxième étirage.

4. Procédé selon la revendication 1, caractérisé en ce que le brin de voile brut est maintenu pendant le deuxième étirage à une température qui est sensiblement égale à celle du premier étirage.

5. Procédé selon la revendication 1, caractérisé en ce que le deuxième étirage qui se produit dans les évidements conduit, dans la zone de la ligne de contact des cylindres, à un amincissement considérable du voile brut allant éventuellement jusqu'à sa perforation.
